(19) Europäisches Patentamt
European Patent Office
Office européen des brevets

(11) Publication number: 0 131 331
B1

(12) # EUROPEAN PATENT SPECIFICATION

(45) Date of publication of patent specification: **13.12.89**

(51) Int. Cl.[4]: **G 07 F 15/00**, G 07 F 7/00, G 07 F 9/02

(21) Application number: **84200952.4**

(22) Date of filing: **02.07.84**

(54) **Commodity dispensing apparatus.**

(30) Priority: **11.07.83 GB 8318719**

(43) Date of publication of application: **16.01.85 Bulletin 85/03**

(45) Publication of the grant of the patent: **13.12.89 Bulletin 89/50**

(84) Designated Contracting States: **AT BE CH DE FR GB IT LI LU NL SE**

(56) References cited:
**EP-A-0 081 921**
**GB-A-2 083 259**
**GB-A-2 096 370**
**US-A-4 162 530**

(73) Proprietor: **MAINMET LIMITED
High Mill, Mill Street Cullingworth
Bradford West Yorkshire, BD13 5HA (GB)**

(72) Inventor: **Anderson, Alan Fyfe c/o Mainmet Limited
High Mill Mill Street Cullingworth
Bradford West Yorkshire, BD13 5HA (GB)**
Inventor: **Easterby, Robert William
66 Springcraft
Hartley Dartford Kent (GB)**

(74) Representative: **Wharton, Peter Robert et al
Urquhart-Dykes & Lord Alliance House 29-31 Kirkgate
Bradford West Yorkshire, BD1 1QB (GB)**

**EP 0 131 331 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to commodity dispensing apparatus particularly for dispensing electricity, gas, water or the like.

Conventional commodity dispensing apparatus presently in widespread use for dispensing predetermined quantities of, for example, public utilities such as electricity, gas, water, and district heating are essentially electro-mechanical machines. The coin-in-the slot meter is typical of these.

Recent new designs of commodity dispensing apparatus have utilised electronics, and particularly microprocessors. In one such arrangement the operating parameters of the dispensing apparatus, that is, the rate at which the commodity is to be dispensed and the amount of credit allowed are set-up by feeding coded tokens into appropriate reading means in the apparatus. The preferred form token is a magnetically encoded card and separate cards are employed for the rate of dispensing and the credit allowance.

The present invention seeks to provide the facility whereby these parameters, at least, may be checked or periodically monitored in order to establish amongst other things that the apparatus is functioning correctly and has not been tampered with.

EP-A-81921 discloses a commodity dispensing apparatus of the type having token reading means and commodity dispensing means which are operative to dispense the commodity according to the parameters determined by the tokens given to the token reading means.

According to the present invention a commodity dispensing apparatus is characterised by including means for checking the operative status of the apparatus, means for storing and carrying out instructions for at least one status check step, and means responsive to a further token being given to the token reading means to cause said instructions to be carried out.

In the preferred form of the invention operation of the commodity dispensing apparatus is controlled by a microprocessor according to a stored digital program and the status check is also carried out by the microprocessor according to a further stored digital program. The result of the status check is displayed for a short period by alpha numeric display means which normally shows the cumulative total of commodity dispensed.

The invention and how it may be carried into practice will now be described, by way of example only, with reference to the accompanying drawings, in which:

Fig. 1 shows a circuit diagram of the commodity dispensing control circuit of such an apparatus,

Fig. 2 shows a flow chart of a complete status check program, and

Fig. 3 shows a flow chart of commodity control during a display step.

In a commodity dispensing apparatus of the type being referred to, the rate at which the commodity is dispensed is set up by feeding a "master" token to the apparatus and this may determine both the dispensing tariff rate and any debt recovery deduction to be made. The commodity is then purchased by feeding a "value" token to the apparatus which sets up the credit allowance of the consumer less any deductions to be made. The apparatus then continues to dispense the commodity until the credit is used up, whereupon either the supply may be disconnected or, the apparatus can continue to operate in an emergency credit mode.

In the electricity dispensing apparatus of Fig. 1 the control circuit basically comprises means (not shown) which measures the number of units of electricity consumed, a circuit breaker means (not shown) which connects the consumers circuits to the mains supply, and which is controlled by the circuit of Fig. 1. At the heart of this control circuit is a microprocessor 1, the token reading means is illustrated schematically at reference 2 (the mechanical and electrical details of the arrangement are omitted for clarity) and is connected to an input 3 of the microprocessor 1 through an amplifier network 4. A memory device 5 is connected with the microprocessor 1 by the read and write connections 6 and 7 respectively. The output of the electricity measuring means is connected to a control circuit input 8 and provides a digital input pulse per one tenth Kwh and is connected via input processing circuits 9 and 10 to the microprocessor 1. An alpha numeric display assembly generally indicated at 11, powered by display driver circuits 12 and 13, is connected by a branched data output highway 14 to microprocessor 1, memory device 5, and address latch 15.

The display assembly 11 may also include a plurality of indicator lights, in the present example there are four which indicate respectively a fault, card error, wrong scheme, and emergency. These are: provided by light emitting diodes 16, 17, 18 and 19, energisation of which is controlled by transistor switches generally indicated at 20 controlled by an amplifier block 21 by further outputs from microprocessor 1. Also provided on the front face of the meter (not shown) is an "emergency credit" push button which when depressed breaks a light path between a further light emitting diode 22 coupled to a light sensor further controlling energisation of input to the microprocessor 1.

Further outputs from the microprocessor 1 control motor drive circuits 23, 24 which provide power to a motor 25 which propels the token reading means (not shown). In the presently described example the token comprises a magnetically encoded card and optically coupled sensors 26, 27 are positioned in the entrance and exit slots of the token reading means such that their respective light beams are broken by the card in its passage through the token reading means. Outputs from the sensors 26 and 27 are connected back to the microprocessor 1 which provides control signals to motor drive circuits 23, 24 as required.

A memory device incorporated in microprocessor 1 provides permanent storage for the operating programs for microprocessor 1 for all facets of its operation and memory device 5 provides a temporary storage capacity for such quantities as value of commodity dispensed, credit allowance, credit remaining, commodity dispensation rate, and numbers of token cards presented. The memory device 5 is powered by a battery 28 in the event of mains power failure in order to retain system parameters.

The initial stage in operation of the apparatus is a presentation of a "master" card to the token reading means which breaks the beam of sensor 26, the microprocessor 1 energises drive circuits 23, 24 to drive motor 25 which propels the card through the token reading means, and which on its exit breaks the beam of sensor 27 which results in microprocessor 1 de-energising circuits 23, 24 and motor 25. During its passage past the read head in the token reading means 2 the magnetically encoded stripe on the card generates corresponding electrical signals in the amplifying network 4 which is fed to input 3 of the microprocessor 1. These signals first identify the card and then represent the parameters concerned and quantities relating thereto. In the next stage the "value" card is presented to the token reading means 2 and in the same manner this generates signals representing the value of the quantity of commodity to be dispensed. The "value" card is erased in the token reading means 2 in response to a signal from microprocessor 1 in order to prevent subsequent reuse of the card. The apparatus thus set up now commences operation by closing the supply circuit breaker (not shown) until credit is exhausted. A conventional electromechanical electricity meter displays a running total of electricity consumed by means of the positions of rotating dials or pointers, in a similar way the present apparatus maintains a visual display of the credit value by means of the digits of display assembly 11.

According to the present invention a check may be made on the operative status of the apparatus by presenting a third, generally referred to as an "engineers", card which brings into operating a special sequence of checks, instructions for which are stored in a check or test program held in the memory device of microprocessor 1. Upon being presented to the token reading means 2 the signals encoded on the card identify it to the microprocessor 1 as an engineers card, which immediately results in the microprocessor calling up the appropriate engineers card program.

The flow chart of Fig. 2 shows the functions of this program, which are normally executed, in parallel with continuing normal operation, i.e. commodity dispensing, of the apparatus. Referring now to the flow chart of Fig. 2 the first step 30 represents program call-up, in the next step 31 the motor 25 is again energised to return the "engineers" card to the engineer. Normally, value token cards are retained by the machine in an internal bin, preferably also the magnetic encoding is erased by passage through a second stage of the token reading means 2.

The check program proper begins at the next step 32 in which all elements of the display assembly 11 are simultaneously energised. At this and each subsequent check stage a five second display subroutine 33 (see also Fig. 3) is called into operation in order to maintain the display for a predetermined period of five seconds sufficient for, say, a hand written record to be made.

At the end of the five second period the program automatically steps onto the next stage for example, by adding a one to a sub-routine counter which, when it reaches a total corresponding to the number of sub-routines in the engineers test program returns the apparatus to normal display mode. Any number and type of check or test sub-routines may be incorporated in the program as required and those shown in Fig. 2 are given only by way of example.

The following sub-routines are shown in Fig. 2, at 34 a check of the state of emergency credit switch 22, at 35 a display of the number of value cards presented to the apparatus, which number is retained in an internal register of memory device 5, at 36 a similar display of the total quantity of cards presented followed by an optional sub-routine 37 in response to depression of a reset switch by which the quantity of cards and value of cards registers may be cleared. The next stage 38 is a display of the total number of cards accepted which is normally not re-settable and is a cumulative total of the number of cards presented to the machine during its lifetime. The next following five display steps 39, 40, 41, 42 and 43 display the various tariff rates according to which the machine is operating, and enable the engineer to check the machine is operating as intended, is not faulty, and has not been tampered with. The final display of this example is of the amount of emergency credit, if any, which the machine has been authorised to allow.

As previously mentioned, the engineers check program is carried out in parallel with normal operation of the commodity dispensing apparatus and only the display functions are interrupted temporarily. In order to permit this a program represented by the flow chart of Fig. 3 is brought into operation which the microprocessor 1 continually cycles and monitors first if any commodity is being used, which is presented by the decision block 45. If the result is positive then the microprocessor 1 updates the commodity register in memory device 5 by the appropriate amount in step 46. Subsequently, if commodity is used at step 47 a further decision is made concerning whether or not all commodity is used, i.e. whether the is remaining credit. If credit is exhausted an output is provided to the circuit breaker means to disconnect the consumers circuits from the commodity supply. This subroutine continues cycling until the check program is completed whereupon the microprocessor 1 returns to operating according to its normal operating program.

**Claims**

1. A commodity dispensing apparatus of the type having token reading means and commodity dispensing means which is operative to dispense the commodity according to the parameters determined by the tokens given to the token reading means, characterised by including means (1) for checking the operative status of the apparatus, means for storing (5) and carrying out instructions (1) for at least one status check step, and means (1) responsive to a further token being given to the token reading means to cause said instructions to be carried out.

2. An apparatus as claimed in claim 1 in which operation is controlled by a microprocessor (1) according to a stored digital programme (5) and a status check is also carried out by the micro processor according to a further stored digital programme.

3. An apparatus as claimed in claim 2 in which the result of the status check is displayed for a short period by an alpha-numeric display means (11).

4. An apparatus as claim in claim 3 in which the alpha-numeric display means (11) normally, in use, shows the cumulative total of commodity dispensed.

5. An apparatus as claimed in any one of claims 1 to 4 in which the commodity dispensed is electricity, gas or water.

6. An apparatus as claimed in any one of claims 1 to 4 in which the commodity dispensed is heat, in, for example, a district heating system.

7. An apparatus as claimed in any one of claims 1 to 6 in which the rate at which commodity is dispensed is set up by feeding a master token to the apparatus and the commodity is then purchased by feeding a value token to the apparatus which sets up a credit allowance less any deductions to be made.

8. An apparatus as claimed in any one of claims 1 to 6 which is further provided with an emergency credit mode whereby a predetermined amount of further commodity can be dispensed without the insertion of a value token.

9. An apparatus as claimed in any one of claims 1 to 8 in which a check on the operative status of the apparatus may be made by presenting a further token which brings into operation a special sequence of checks, instructions for which are stored in a check or test programme held in a memory.

10. An apparatus as claimed in claim 9 in which the further checks include a test that the apparatus is functioning correctly and has not been tampered with.

**Patentansprüche**

1. Vorrichtung zur Abgabe von Verbrauchsgütern von der Bauart, die Markenleseeinrichtungen und Verbrauchsgutabgabeeinrichtungen aufweist, die so arbeitet, daß sie das Verbrauchsgut gemäß den Parametern abgibt, die durch die Marken vorgegeben werden, welche der Markenleseeinrichtung eingegeben werden, dadurch gekennzeichnet, daß sie eine Einrichtung (1) zum Prüfen des Betriebszustands der Vorrichtung, eine Einrichtung zum Speichern (5) und Ausführen der Befehle (1) für zumindest einen Zustandsprüfschritt sowie eine Einrichtung (1) aufweist, die auf eine weitere der Markenleseeinrichtung zugeführte Marke anspricht, um dafür zu sorgen, daß die Befehle ausgeführt werden.

2. Vorrichtung nach Anspruch 1, wobei der Betrieb von einem Mikroprozessor (1) gemäß einem gespeicherten Digitalprogramm (5) gesteuert und eine Zustandsprüfung ebenfalls vom Mikroprozessor gemäß einem weiteren gespeicherten Digitalprogramm ausgeführt wird.

3. Vorrichtung nach Anspruch 2, wobei das Ergebnis der Zustandsprüfung für eine kurze Periode von einer alphanumerischen Anzeigeeinrichtung (11) angezeigt wird.

4. Vorrichtung nach Anspruch 3, wobei die alphanumerische Anzeigeeinrichtung (11) normalerweise im Betrieb die kumulative Gesamtmenge von abgegebenem Verbrauchsgut anzeigt.

5. Vorrichtung nach einem der Ansprüche 1 bis 4, wobei das abgegebene Verbrauchsgut Elektrizität, Gas oder Wasser ist.

6. Vorrichtung nach einem der Ansprüche 1 bis 4, wobei das abgegebene Verbrauchsgut Wärme beispielsweise in einem Fernheizsystem ist.

7. Vorrichtung nach einem der Ansprüche 1 bis 6, wobei der Tarif, mit dem das Verbrauchsgut abgegeben wird, vorgegeben wird durch Einstekken einer Hauptmarke in die Vorrichtung, und wobei das Verbrauchsgut dann gekauft wird durch das Einstecken einer Wert-Marke in die Vorrichtung, welche eine Krediteinräumung abzüglich etwaiger vorzunehmender Abzüge einstellt.

8. Vorrichtung nach einem der Ansprüche 1 bis 6, die weiterhin mit einer Notfall-Kreditbetriebsart ausgerüstet ist, mit der eine vorgegebene Menge an weiterem Verbrauchsgut ohne das Einstecken einer Wert-Marke abgegeben werden kann.

9. Vorrichtung nach einem der Ansprüche 1 bis 8, wobei eine Prüfung des Zustandes der Vorrichtung vorgenommen werden kann, indem man eine weitere Marke präsentiert, welche eine spezielle Folge von Prüfungen in Betrieb setzt, für die die Befehle in einem Prüf- oder Testprogramm gespeichert sind, welches in einem Speicher enthalten ist.

10. Vorrichtung nach Anspruch 9, wobei die weiteren Prüfungen einen Test umfassen, daß die Vorrichtung ordnungsgemäß funktioniert und nicht mißbraucht worden ist.

**Revendications**

1. Appareil pour la distribution de produits, du type qui comprend des moyens de lecture d'une marque-jeton et des moyens de distribution de produit agissant pour distribuer un produit en fonction de paramètres déterminés par les marques données aux moyens de lecture de marque, caractérisé en ce qu'il comprend des moyens (1) pour contrôler l'état de marche de l'appareil, des moyens pour mémoriser (5) et exécuter des instructions (1) destinées à au moins une étape de contrôle d'état, et des moyens (1) agissant en réponse à une marque supplémentaire donnée aux moyens de lecture de marques pour faire exécuter lesdites instructions.

2. Appareil selon la revendication 1, dans lequel les opérations sont commandées par un microprocesseur (1) selon un programme numérique (5) mémorisé, et où le microprocesseur effectue aussi un contrôle d'état selon un autre programme numérique mémorisé.

3. Appareil selon la revendication 2, dans lequel le résultat du contrôle d'état est affiché un court moment par des moyens d'affichage alphanumérique (11).

4. Appareil selon la revendication 3, dans lequel les moyens d'affichage alphanumérique (11) montrent normalement, pendant l'utilisation, le total cumulé de produit distribué.

5. Appareil selon l'une quelconque des revendications 1 à 4, dans lequel le produit distribué est de l'électricité, du gaz ou de l'eau.

6. Appareil selon l'une quelconque des revendications 1 à 4, dans lequel le produit distribué est de la chaleur, par exemple, dans un système de chauffage de secteur.

7. Appareil selon l'une quelconque des revendications 1 à 6, dans lequel le débit de distribution du produit est fixé en introduisant une marque maîtresse dans l'appareil, le produit étant ensuite acheté en introduisant une marque de valeur dans l'appareil qui établit une autorisation de crédit moins les éventuelles déductions à faire.

8. Appareil selon l'une quelconque des revendications 1 à 6 comprenant en outre un mode de crédit de secours grâce auquel une quantité supplémentaire prédéterminée de produit peut être distribuée sans l'introduction de la marque de valeur.

9. Appareil selon l'une quelconque des revendications 1 à 8, dans lequel on peut effectuer un contrôle de l'état de marche de l'appareil en présentant une autre marque qui déclenche une séquence spéciale de contrôles dont les instructions correspondantes sont mémorisées dans un progamme de contrôle ou de test maintenu dans une mémoire.

10. Appareil selon la revendication 9, dans lequel les contrôles supplémentaires comportent un test pour déterminer si l'appareil fonctionne correctement ou n'a pas été forcé.

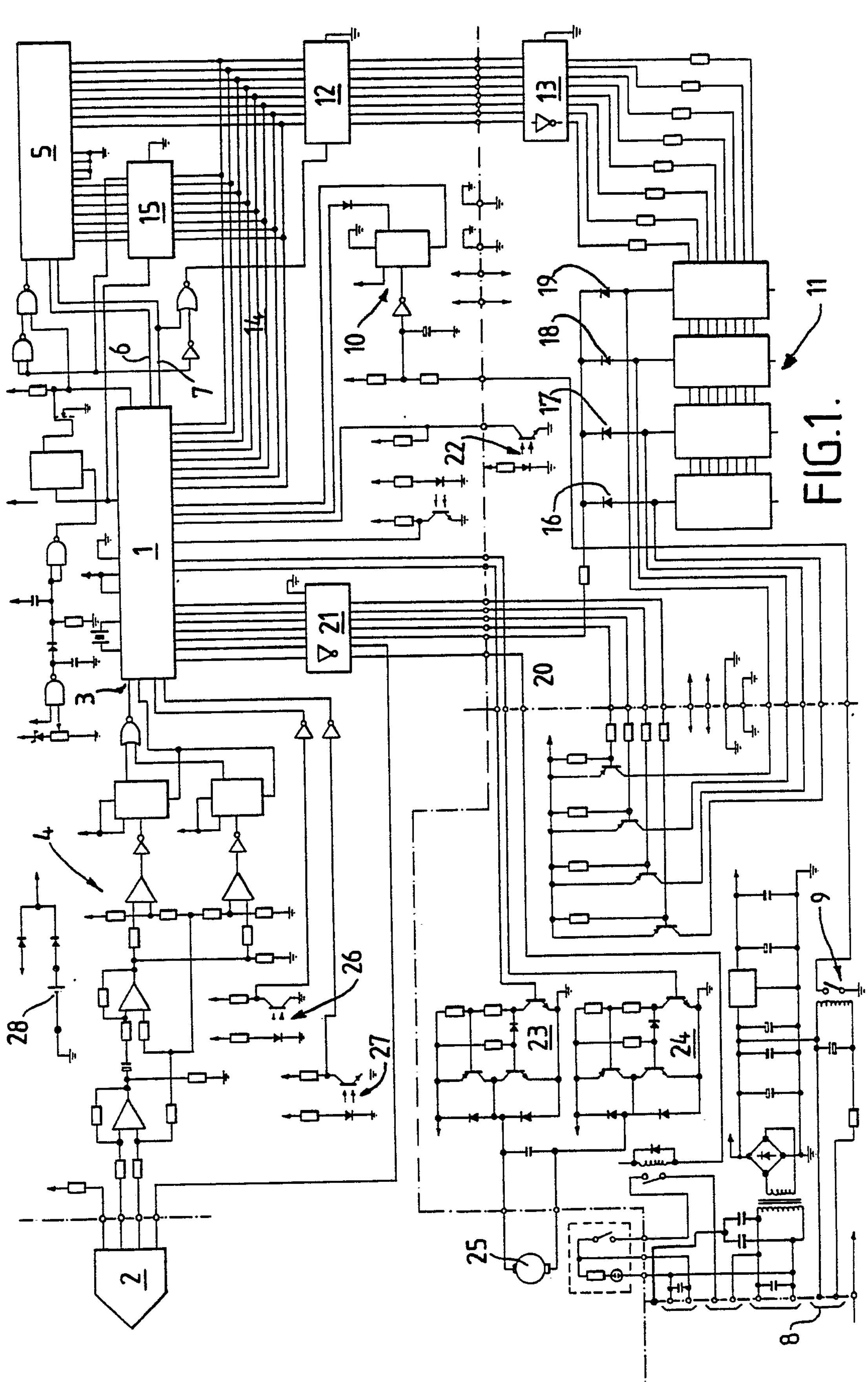


FIG.1.

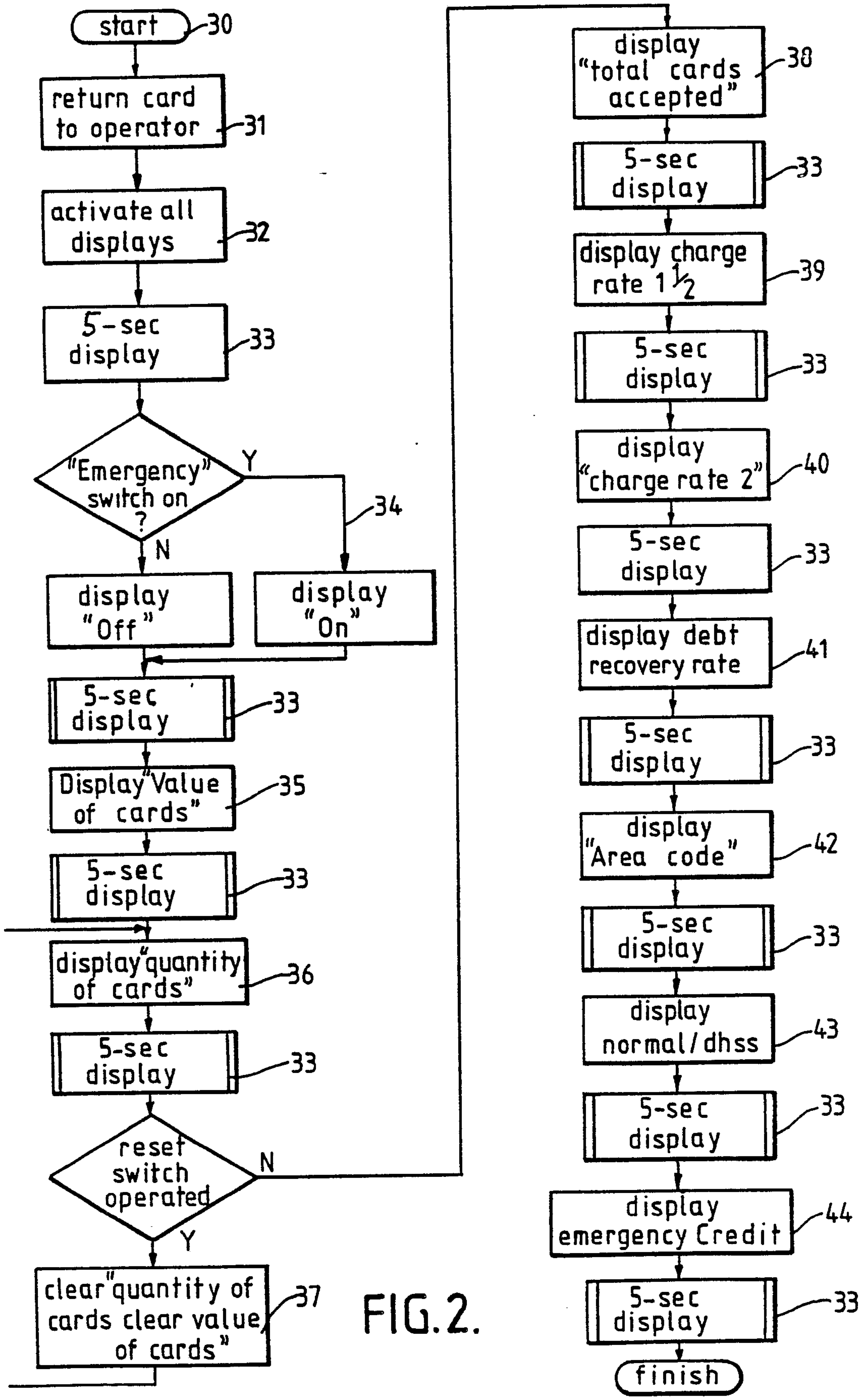
start
30
return card to operator
31
activate all displays
32
5-sec display
33
"Emergency" switch on ?
Y
N
34
display "Off"
display "On"
5-sec display
33
Display "Value of cards"
35
5-sec display
33
display "quantity of cards"
36
5-sec display
33
reset switch operated
N
Y
clear "quantity of cards clear value of cards"
37
display "total cards accepted"
38
5-sec display
33
display charge rate 1½
39
5-sec display
33
display "charge rate 2"
40
5-sec display
33
display debt recovery rate
41
5-sec display
33
display "Area code"
42
5-sec display
33
display normal/dhss
43
5-sec display
33
display emergency Credit
44
5-sec display
33
finish

FIG.2.

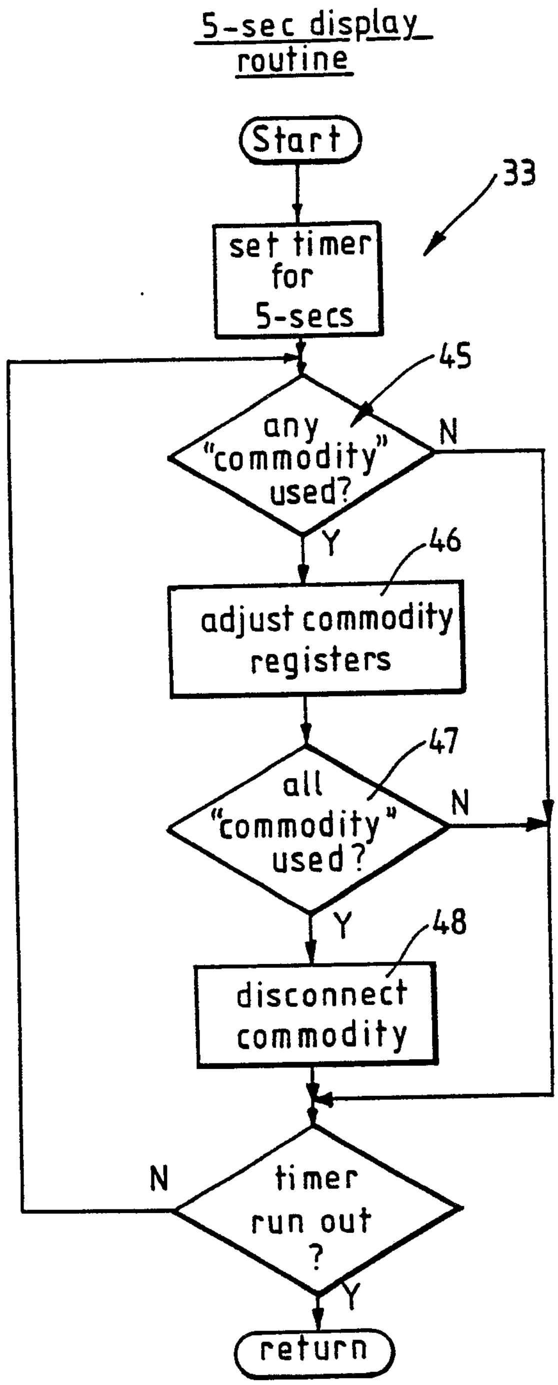
5-sec display routine
Start
33
set timer for 5-secs
45
any "commodity" used?
N
Y
46
adjust commodity registers
47
all "commodity" used?
N
Y
48
disconnect commodity
N
timer run out ?
Y
return

FIG. 3.